# EUROPEAN PATENT APPLICATION

(11) **EP 1 129 780 A2**
(43) Date of publication of application: **05.09.2001**
(21) Application number: 01104883.2
(22) Date of filing: 28.02.2001
(51) Int. Cl.: B02C 4/08, B02C 19/12

(54) **Apparatus for crushing/seperating plasterboard**

(30) Priority: 01.03.2000 JP 2000104213
(71) Applicant: Furuta, Takahiro, Kobe-shi, Hyogo-ken (JP)
(72) Inventor: Furuta, Takahiro, Kobe-shi, Hyogo-ken (JP)
(74) Representative: Meddle, Alan Leonard

(57) **Abstract**

A crushing/separating apparatus of a plasterboard comprises a pair of horizontally extending crushing rolls 1 arranged in the vertical direction, supply means 6 of a plasterboard, said supply means being adapted to supply a plasterboard in the horizontal direction, and a pair of horizontally extending auxiliary rolls 2 provided adjacent to the crushing rolls 1 to scrape off the plaster components and guide the separated paper parts outwardly in cooperation with comb-shaped screens 3. The apparatus is capable of simultaneously crushing plasterboards and separating the plaster components from the paper parts so as to obtain plaster wastes free from paper parts while facilitating the supply work of the plasterboards.

## Description

### Technological field of invention

This invention relates to a crushing/separating apparatus of plasterboards. Particularly, the present invention relates to such an apparatus which enables plasterboards to be supplied in the horizontal direction when plasterboards are disposed by crushing them; and also enables the paper parts pasted to both sides may be separated from the plaster portions simultaneously while the plasterboards are crushed.

### Prior art

A conventional crushing/separating apparatus supplies plasterboards to the upper part of the apparatus or adopts a mechanism based upon the vertical fall of plasterboards. Thus, the position where the plasterboards are supplied is comparatively high, and therefore, the supply work is hard and a continuous supply of plasterboards by means of a transportation device, such as, a belt conveyer, is also difficult to achieve.

In addition, a conventional crushing apparatus does not provide the function of separating paper pasted to both sides of a plasterboard from the main plaster portion. Thus, it can only reduce the volume of the plasterboards by crushing operation to simply give a mixture of crushed plaster and paper. Hence, lawful processing or recycling of the plaster or paper has been problematical requiring an additional separating device in order to separate paper and plaster portions. Moreover, even in case of an apparatus having a built-in separating means, there is a difficulty in the complete separation of paper and plaster; and paritcularly, it has been problematical that paper components are likely to mix into the plaster portion.

### Problem to be solved by invention

The present invention aims to improve the workability of the apparatus by making the position where a plasterboard is supplied lower, and to facilitate connection with a conventional transportation means, such as, a belt conveyer and a continuous supply of plasterboards.

This invention also aims at the paper pasted to both sides of a plasterboard to be separated from the plaster portion at the same time the crushing of a plasterboard is conducted, and moreover, without a separating device, such as, a vibration screen, thereby enabling a lawful processing or recycling of the paper and plaster portions.

In addition, this invention aims to obtain waste products in which paper does not exist in the plaster portion after crushing operation.

Moreover, this invention aims at the simplification of the apparatus so that when not in use or being transported, the supply means can be folded or collapsed, which otherwise forms a troublesome projection.

### Summary of Invention

The present invention provides a crushing/separating apparatus of a plasterboard comprising a pair of horizontally extending crushing rolls arranged in the vertical direction; and supply means of a plasterboard, said supply means being adapted to supply a plasterboard in the horizontal direction.

A flat conveyer is horizontally mounted to the side of the apparatus to forcibly supply plasterboards toward a pair of crushing rolls.

The pair of crushing rolls is adapted to be rotated in the opposite directions at the same speed so that paper parts pasted to both surfaces of the plasterboard may pass without being crushed. The plaster portion held between the paper parts are crushed in the form of particles or powder so as to be separated from the paper parts.

A pair of auxiliary rolls adjacent to the pair of crushing rolls is adapted to cooperate with the crushing rolls to scrape off the plaster portions remaining on the paper -surfaces. The thus separated paper parts are guided by a pair of the comb-shaped screens.

Moreover, the position of one of the crushing rolls located in the lower position is fixed while the roll located in the upper position is adapted to be movable in the vertical direction in response to the thickness of the plasterboard that is fed into the apparatus, thereby adjusting the clearance of the pair of crushing rolls to be at the optimum value.

Finally, the supply means preferably comprises a flat conveyer arranged horizontally to the side of the apparatus, and whennot in use, the flat conveyer being collapsible in the vertical direction with a view to eliminating any projecting portions.

### Function

In the crushing/separating apparatus of this invention, the plasterboards horizontally supplied toward the opposed crushing rolls arranged vertically are subjected to the actions of compression and shearing. The plaster portion placed between the paper parts on both surfaces are crushed in the form of grains or particles of about 1-10 mm size or powder of 1 mm or less size, and flakes off from the paper parts, and fall downward.

As for the paper parts on the surfaces of the plasterboards, they come into contact with the opposed crushing rolls and may arcuately pass in the upper and lower directions retaining the original forms, as the action of shearing decreases due to the rotation of the crushing rolls in the opposite directions at the same speed.

This means that priority is given to the paper which is in contact with the crushing rolls not being crushed, in effect sacrificing the effect of crushing by the shearing action to some extent. In this case, plaster components considerably adhere to the inner surfaces of the paper parts which maintain the original configuration.

Such plaster components adhering to the paper parts may be scraped off with the auxiliary rolls with the breaker function which rotates with a faster peripheral speed than that of the crushing rolls. Furthermore, the paper parts separated from the board may be guided in the directions upper and lower respectively by means of comb-shaped screens and finally discharged outside the apparatus. At this time, the auxiliary rolls play the role of inducing the exhaust of the paper parts.

Since the paper parts are located outside the plaster portion from the beginning to the end, they neither impede the fall of the crushed plaster portion nor the passage thereof through the comb-shaped screens.

Moreover, the clearance between the crushing rolls may accommodate the plasterboards with different board thicknesses, because it may be adjusted optimumly in response to the difference of the torque according to the board thicknesses with the initially set value being the minimum. For instance, the initially set clearance of from 4.5 mm to 6.0 mm will be appropriate for the plasterboards of the board thicknesses from 9.5 mm to 12.5 mm which account for about 90% of the plasterboards marketed in Japan. In addition, it is possible to accommodate the plasterboards of the board thicknesses from 9.5 mm or less, or 12.5 mm or more by changing the initially set value. However, it is not possible to accommodate the plasterboards of the board thicknesses which fall below those initially set values.

### Brief description of drawings

Figure 1 is a shematic drawing showing the cooperation of the crushing function, the separating function, and the scraping function according to the present invention.

Figure 2 is a perspective view of an embodiment of an auxiliary roll.

Figure 3 is a perspective view of an embodiment of comb-shaped screens; and

Figure 4 is a side cross section of an embodiment of the crushing/separating apparatus of the present invention illustrating the above-mentioned functions.

### Embodiments

Embodiments of this invention will be explained hereafter with reference to the attached drawings.

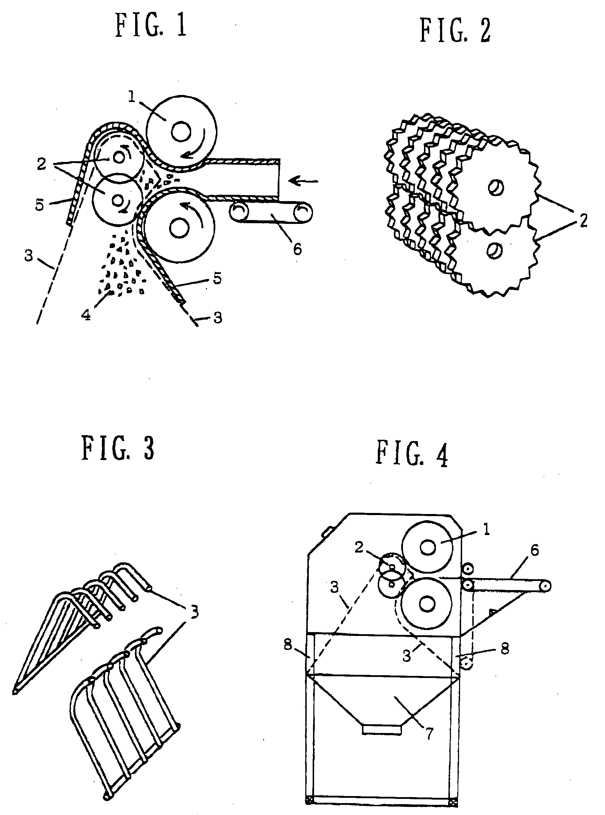

Figure 1 is a shematic drawing showing the cooperation of the crushing function by means of a pair of vertically-disposed horizontally extending crushing rolls, the scraping function by means of a pair of horizontally extending auxiliary rolls and the separating function by means of comb-shaped screens. The reference numeral 1 indicates a crushing roll, 2 denotes an auxiliary roll, 3 shows a comb-shaped screen, 4 indicates a crushed plaster, 5 is a separated paper part and 6 is a flat conveyer. The separated paper parts 5 on both sides (top and bottom) of the board are guided in the upper and lower directions respectively by the comb-shaped screens 3, and exhausted outside the apparatus.

Figure 2 is a perspective view of an embodiment of the auxiliary rolls 2 to scrape off the remaining plaster components from the paper surfaces. These auxiliary rolls 2 also effectively guide the paper parts so that they are discharged.

The pair of the horizonally extending auxiliary rolls 2 are provided adjacent to the pair of the crushing rolls 1 and are arranged in the ventical direction so as to be operable in cooperation with the crushing rolls 1 sandwiching the paper parts therebetween. Also, each of the auxiliary rolls 2 is composed of alternately arranged disks having peripheral teeth and spacers (not shown) such that the peripheral teeth of each of the different rolls stagger with each other. By so doing, the peripheral teech are capable of contributing to'the crushing of the plaster portions. The auxiliary rolls 2 are rotated in the opposite directions relative to the crushing rolls 1 with a faster peripeheral speed than that of the crushing rolls 1 so as to effectively scrape off the plaster components remaining on the paper surfaces,

Figure 3 illustrates an embodiment of the comb-shaped screens 3 (top and bottom) installed in the spaces formed between the adjacent disks of the auxiliary rolls 2, which cooperate with the crushing function as well as the scraping function. The upper ends of the comb-shaped screens 3 are located on or close to the imaginary center line in the gap formed by the pair of the crushing rolls 1 so as to effectively guide the separated paper parts 5 as depicted in Figure 1.

Figure 4 is a side cross section of one example of the crushing/separating apparatus of the present invention, which comprises crushing rolls 1, auxiliary rolls 2, comb-shaped screens 3 and a flat conveyer 6. The sign 7 is a collecting chute of the crushed plaster components, and the sign 8 8 is an exit of the separated paper parts. When not in use, the flat conveyer 6 can be folded in the vertical direction.

The present invention may take the following embodiment modes owing to the structure and function as explained above:
(1) The surface of the crushing roll 1 can adopt a laterally grooved form, distributed protruding teeth, or teeth of a saw, etc.
(2) The width of a curushing roll 1 may be practically from 300 mm to 1,000 mm. But, the length is not limited.
(3) Distributed conical protrusions or teeth of a saw, etc. are effective as the surface form of the auxiliary roll 2.
(4) Round bars or flat bars, etc. may be used to form a comb-shaped screen 3.
(5) The material of the comb-shaped screen 3 is not limited, including metals and plastics.
(6) The upper and lower ends of the comb-shaped screens 3 may be joined together so as to form an integral structure.
(7) The length of the flat conveyer should functionally be from 100 mm to to 1200 mm. However, there should no limitations.

### Advantages of invention

Because the crushing/separating apparatus of this invention is structured as above-mentioned, the following advantages may be achieved;
(1) The supply position of the plasterboards may be made comparatively low, because the plasterboards can be supplied in the horizontal direction to the side of the apparatus; -thus, the supply work may be facilitated.
(2) It becomes easy to connect the apparatus with a transportation device of a general-purpose belt conveyer, etc., because the plasterboards can be horizontally and continuously supplied.
(3) Because the separating function is provided in the crushing apparatus itself, a separating device is not independently needed. Therefore, the whole processes of crushing and separation can be simplified.
(4) The equipment cost which relates to crushing and separation can be reduced by simplifying the whole process.
(5) The separating mechanism of this invention can reduce energy costs, since it does not need separate power.
(6) Because paper components do not exist in the crushed plaster components, it is possible to recycle the wastes or lawfully process the same.
(7) Because the supply means which becomes a projection can be folded or collapsible, safety during transportation can be enhanced. In addition, packing can be simplified, and the transportation cost may be reduced,

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A crushing/separating apparatus of a plasterboard comprising:
a pair of horizontally extending crushing rolls arranged in the vertical direction; and
supply means of a plasterboard, said supply means being adapted to supply a plasterboard in the horizontal direction,

2. A crushing/separating apparatus of a plasterboard according to claim 1 wherein said pair of crushing rolls are adapted to be rotated in the opposite directions at the same speed so that paper parts pasted to both surfaces of said plasterboard may pass without being crushed.

3. A crushing/separating apparatus of a plasterboard according to claim 1 wherein one of said pair of crushing rolls is adapted to be movable in the vertical direction in response to the thickness of the plasterboard.

4. A crushing/separating apparatus of a plasterboard according to claim 1 wherein a pair of horizontally extending auxiliary rolls are provided adjacent to said pair of crushing rolls, said auxiliary rolls being arranged in the vertical direction so as to be operable in cooperation with said crushing rolls.

5. A crushing/separating apparatus of a plasterboard according to claim 1 wherein each of said auxiliary rolls is composed of alternately arranged disks having peripheral teeth and spacers such that said peripheral teeth of each of the different rolls stagger with each other.

6. A crushing/separating apparatus of a plasterboard according to claim 1 wherein comb-shaped screens are disposed in the spaces formed between the adjacent disks of each of said auxiliary rolls so that the paper parts separated from the plasterboard may be guided,

7. A crushing/separating apparatus of a plasterboard according to, claim 1 wherein said supply means comprises a flat conveyer arranged horizontally to the side of the apparatus, and when not in use, said flat conveyer being collapsible in the vertical direction

8. An apparatus for crushing board, comprising:
a pair of crushing rollers, disposed one above the other, for crushing board therebetween; and
means to feed board to the crushing rollers in a substantially horizontal direction.

9. An apparatus according to Claim 8, further comprising:
at least one further roller; and
means to guide a paper portion of the board towards the further roller once the board has passed between the crushing rollers.

10. A method of crushing board, comprising the steps of:
providing a pair of crushing rollers, disposed one above the other, for crushing board therebetween; and
feeding board to the crushing rollers in a substantially horizontal direction.

11. A method according to Claim 10, further comprising the step of:
providing at least one further roller; and
guiding a paper portion of the board towards the further roller once the board has passed between the crushing rollers
